# EUROPEAN PATENT APPLICATION

(11) **EP 4 520 611 A1**
(43) Date of publication of application: **12.03.2025**
(21) Application number: 24193986.7
(22) Date of filing: 09.08.2024
(51) Int. Cl.: B61B 10/00, B65G 63/04

(54) **EQUIPMENT FOR TRANSFERRING SUPPORTS FOR SUSPENDED LOADS**

(30) Priority: 13.09.2023 PT 2023118914
(71) Applicant: Imeguisa Portugal - Indústrias Metálicas Reunidas, SA, 2951-901 Quinta do Anjo (PT)
(72) Inventor: Brito Filipe, Orlando José, Aires (PT)
(74) Representative: Moniz Pereira, Manuel

(57) **Abstract**

The present invention concerns an equipment for transferring supports (E), more specifically, for collecting and delivering supports for suspended loads between storage structures and transport structures and vice versa, thus enabling the movement of loads, both in warehouses and in manufacturing facilities, without human intervention. The present invention fills an existing need for the automation of material handling and movement processes within factories or warehouses. The equipment of the invention enables loading and unloading from both sides, according to the needs of the storage facilities, modular in a monorail system or other, of the storage sequence of the parts suspended on supports, and of the transport structure. The equipment comprises a main support (1) to which a double rail (2) and a drag mechanism (3) are attached.

## Description

### Field of the invention

The present invention falls within the field of equipment for transferring loads, more precisely an equipment for collecting and delivering supports for suspended loads between storage structures and transport structures and vice versa, thus enabling the movement of materials and loads, both in warehouses and in manufacturing facilities, without the need for human intervention.

### Framework of the invention

The transfer of supports for suspended loads between storage structures and transport structures, with or without load, requires a handling process that involves a manual effort of collecting and delivering the supports with or without load, either from the storage structure to the transport structure or from the transport structure to the storage structure.

Given the lack of automation equipment for this task, the transfer of supports between structures has to be carried out manually, usually by the employees of the companies, and there is a high probability that these employees will adopt ergonomically flawed positions, which can be considered as a risk factor for injuries due to repetitive strain or even entrapment.

Some solutions for the automation of this task were tested, but never adopted, as they were very expensive due not only to the amount of equipment needed and the respective associated cost but also to the investment required in the replacement/adaptation of existing storage structures and to continuous maintenance, with the need to store spare parts.

### Background to the invention

There are several documents about the state-of-the-art that refer to equipment and processes for transferring loads between structures.

For example, document EP0693409B1 discloses an "Apparatus for transferring loads".

However, no document was found that presents or suggests a solution for an equipment and a method for transferring supports for suspended loads between storage structures and transport structures and vice versa, without human intervention.

### Advantages of the invention

The present invention fills an existing need in the automation of material handling and movements processes inside factories or warehouses within the scope of Internal Logistics or Intralogistics, which enables lightening the effort spent by employees dedicated to these tasks or even assign them other functions that promote productivity in their internal processes.

Automating the process is in itself an advantage, as it makes it possible to obtain processes that are more consistent, better synchronized, and with a higher level of control, which results in the elimination of deviations stemming from human error.

The simplicity of the solution allows it to be applied and implemented in new or existing facilities, regardless of the manufacturer of the storage structure and the monorail applied, without the need for investment in auxiliary equipment, additional structures, or the replacement of existing infrastructures in the warehouses or manufacturing facilities for which it is intended.

Just one unit of the equipment of the invention is enough for the entire industrial facility or warehouse to which it is intended to benefit from its work, even if equipped with storage structures from different manufacturers.

The equipment of the invention enables the loading and unloading, according to the needs of the storage facilities, modular in a monorail system or other, of the storage sequence of the suspended loads on supports, and of the transport structure.

The equipment of the invention, which operates autonomously, can easily be installed in transport structures, commonly called "transport racks", which can be moved within the facilities by Automatic Guided Vehicle (AGV) or by Autonomous Mobile Robot (AMR), thus making the entire material handling process automatic.

### Brief description of the drawings

These and other features can be easily understood from the attached drawings, which should be considered as mere examples and in no way restrictive of the field of the invention. In the figures, and for illustrative purposes, the measurements of some of the elements may be exaggerated and not drawn to scale. The absolute dimensions and relative dimensions do not correspond to the actual relationships for the embodiment of the invention.

In a preferred embodiment:

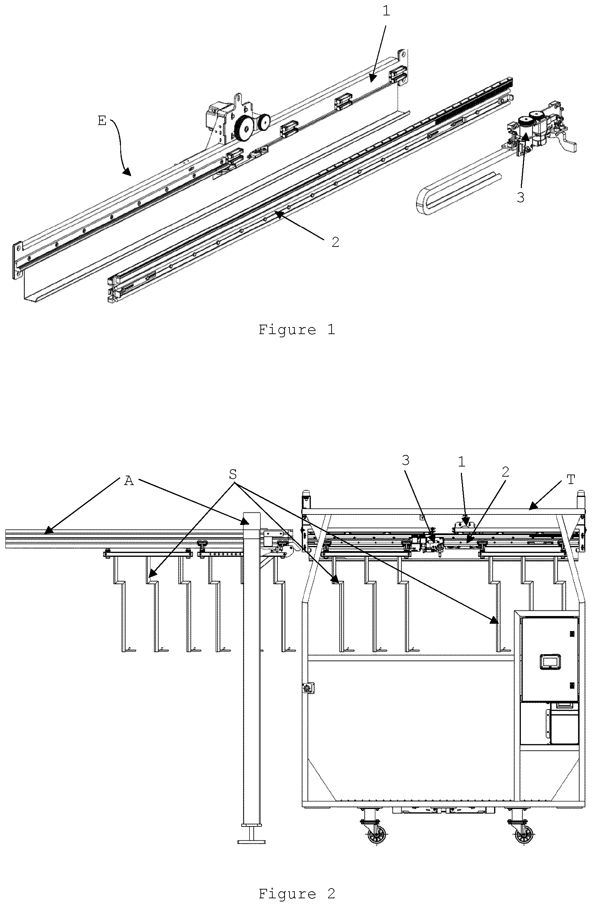

Figure 1 presents a perspective view of the equipment of the invention, which consists of a main support to which a double rail and a drag mechanism are coupled.
Figure 2 presents an overview of the equipment of the invention and its surroundings, with visible supports for suspended loads, which move between storage structures and transport structure and vice versa and to which the equipment for transferring supports for suspended loads is attached.

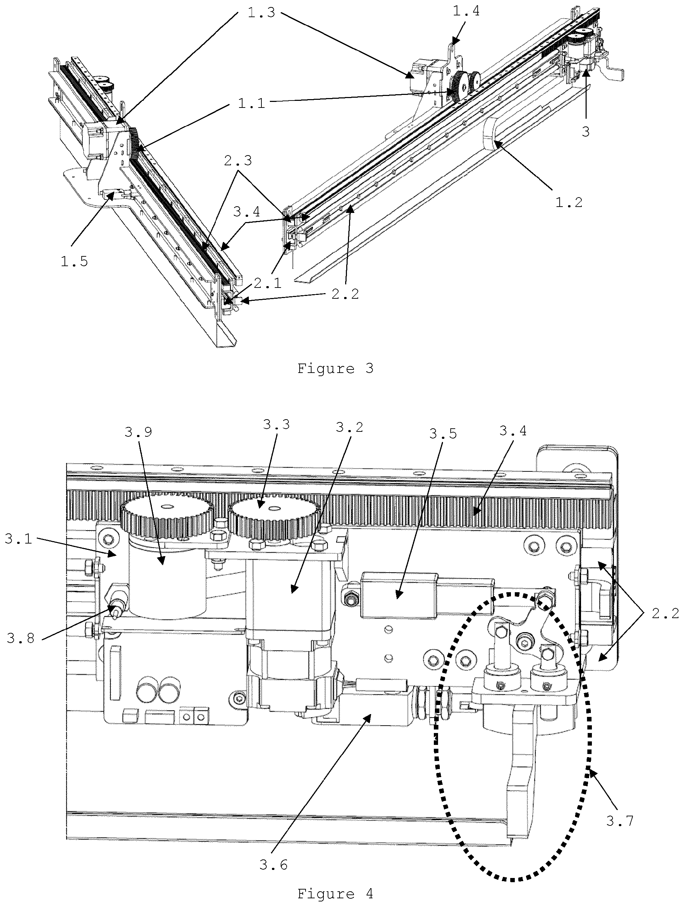

Figure 3 shows a front and rear perspective view of the double rail.
Figure 4 shows a front view of the drag mechanism.

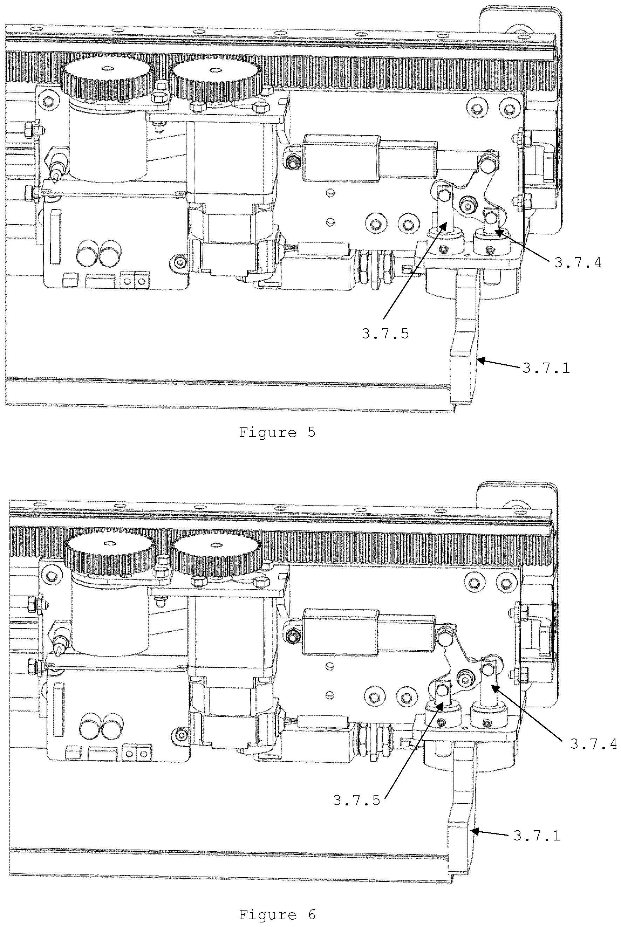

Figure 5 shows a detail of the dragger lock by locking pin 1.
Figure 6 shows a detail of the dragger lock by locking pin 2.
Figure 7 shows an exploded view of the mechanical element in the drag mechanism.
Figure 8 shows a storage structure equipped with a monorail, where the supports for suspended loads circulate.
Figure 9 shows a transport structure equipped with a monorail, where the supports for suspended loads are located.
Figure 10 shows a detail of the detection of the support for suspended loads by the drag lever.
Figures 11 to 14 show views of the movement of the supports for suspended loads between the storage and transport structures:

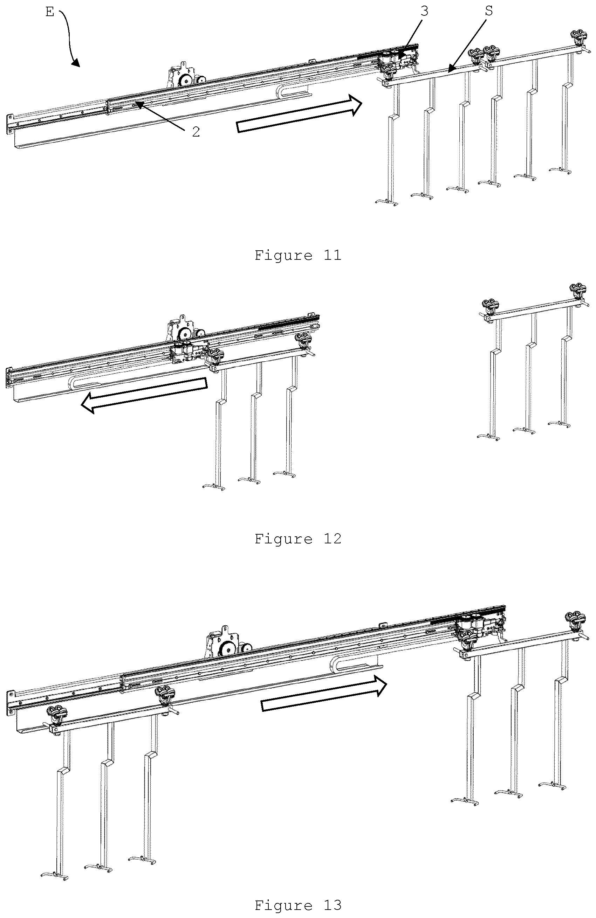

   - Figure 11 shows the inbound movement of the supports for suspended loads in the storage structure;
   - Figure 12 shows the movement of the supports for suspended loads into the transport structure;
   - Figure 13 presents an overview of the initial outbound movement of the supports for suspended loads to the storage structure;

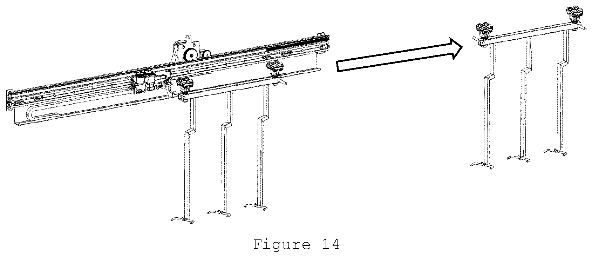

   - Figure 14 shows an overview of the final outbound movement from the supports for suspended loads to the storage structure.

The figures indicate the elements and components of the equipment of this invention, as well as elements necessary for the operation of the invention:
A - storage structure
   A.1 - monorail of the storage structure
S - supports for suspended loads
   S.1 - detection pin
   S.2 - movement mechanism
T - transport structure
   T.1 - monorail of the transport structure
E - equipment for transferring supports
1 - main support
   1.1 - attack pinion of the main support
   1.2 - articulated rail for electrical leads
   1.3 - double rail motor
   1.4 - positioning sensor
   1.5 - end-of-course sensor
2 - double rail
   2.1 - rail 1
   2.2 - rail 2
   2.3 - rack of the double rail
3 - drag mechanism
   3.1 - support of the drag mechanism
   3.2 - motor of the drag mechanism
   3.3 - attack pinion of the drag mechanism
   3.4 - rack of the drag mechanism
   3.5 - linear actuator
   3.6 - detection sensor for supports for suspended loads
   3.7 - mechanical element
      3.7.1 - dragger
         3.7.1.1 - disc
         3.7.1.2 - drag lever
      3.7.2 - connector
      3.7.3 - rocker
      3.7.4 - selection pin 1
      3.7.5 - selection pin 2
      3.7.6 - torsion spring
   3.8 - end-of-course control sensor
   3.9 - position sensor of the drag mechanism

### Detailed description of the invention

"Substantially vertical", "substantially horizontal", "substantially cylindrical", "substantially linear", and "substantially centred" are understood as preferential positions and shapes for the embodiment of the invention, which may work with other positions and other formats.

The terms "lateral end", "bottom", "top", "exterior", "substantially equal", and "front end", "vertical end", "lateral end", used in the description are for descriptive purposes and not necessarily to describe relative positions. It should be noted that the terms are used interchangeably in appropriate circumstances and that the embodiments of the invention described herein are capable of operating in other orientations than those described or illustrated herein.

"Substantially" means that the description of the shape or position of an element of this invention is not mathematically or geometrically accurate, but that the shape or position of an element of this invention is recognized by an expert in the field as having generally or approximately the shape or position described.

The application of the principles described herein are not limited to the presented embodiments.

The principles described herein can be applied to any transfer system for supports for suspended loads.

Further, although some embodiments have multiple new features, all features can be independent and it is not essential that all of them be used in a single embodiment.

Transfer systems for supports for suspended loads with the principles described herein can comprise any number of the presented features.

Referring to the figures, the present invention refers to an equipment for transferring supports for suspended loads, which enables the collection and delivery of supports for suspended loads to be automated between storage structures and transport structures, in a simple, flexible, functional, and effective way, facilitating the movement of materials between different locations both in warehouses and in manufacturing facilities, totally or partially eliminating human participation/ intervention in the process, with benefits associated with the elimination of human effort, the possibility of transporting heavier loads, the automation of logistics processes, and greater control and management of logistics processes.

This equipment is designed to receive and deliver supports for suspended loads (S) in existing storage structures (A), namely in warehouses and manufacturing facilities. This movement of loads is carried out, for example, between the storage facilities for suspended loads where the loads are manufactured and the warehouses where they are stored, and between the warehouses where the loads are stored and the storage facilities for suspended loads where they are to be used. Examples of the type of loads that are moved between the various facilities, which can take advantage of the equipment of the invention, are some of the components used in the automotive industry, namely: doors, hoods, roofs, bumpers, various injected or stamped parts, among others.

More specifically, the equipment of the invention transfers the load supports (S) that are on the storage structure monorail (A.1) to the transport structure monorail (T.1).

The equipment for transferring supports (E) of the invention consists of a main support (1), to which a double rail (2) and a drag mechanism (3) are attached.

The double rail (2) consists of two rails, rail 1 (2.1) and rail 2 (2.2), which have a substantially linear shape. The double rail motor (1.3), which is fixed to the main support (1), is responsible for the movement of rail 1 (2.1) and whose movement is transmitted, through an attack pinion of the main support (1.1) existing on its drive axle, to a rack of the double rail (2.3) fixed to rail 1 (2.1). The aforementioned rail 1 (2.1) serves as a support for rail 2 (2.2), on which the drag mechanism support (3.1) is located, the movement of which is carried out by means of the motor of the drag mechanism (3.2), which is coupled to the drag mechanism support (3.1) and whose movement is transmitted by an attack pinion of the drag mechanism (3.3) existing on its drive axle, to a rack of the drag mechanism (3.4) fixed on rail 1 (2.1). A positioning sensor (1.4) ensures that the double rail (2) is in a substantially centred position in relation to the main support (1). An articulated rail for electrical leads (1.2) keeps the leads required for the drag mechanism (3) properly tensioned and supported. Next to the double rail motor (1.3) is the end-of-course sensor, which ensures that the double rail (2) comes to a standstill near the lateral end of the main support (1), i.e., the function of the end-of-course sensor is to detect the limit positioning of the double rail (2).

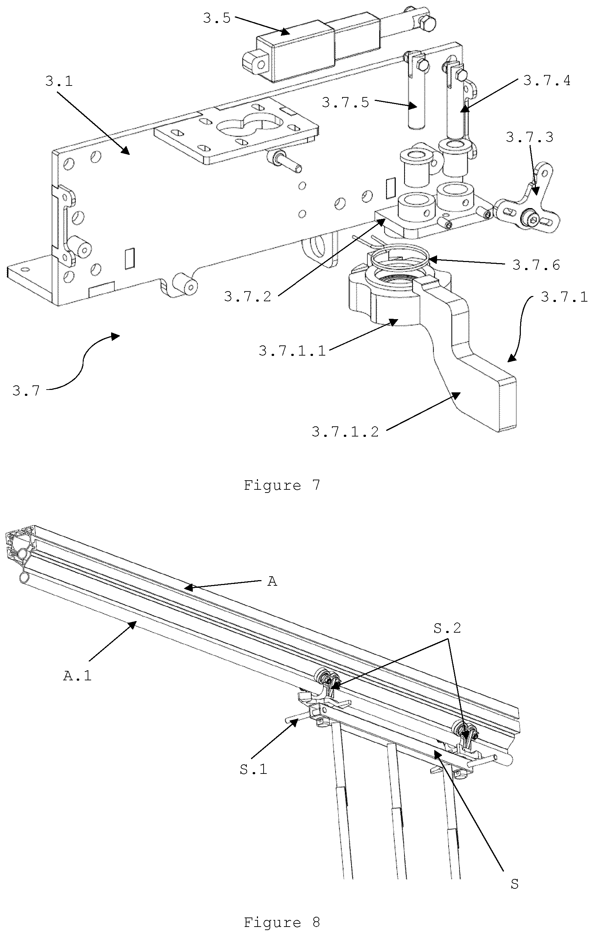

According to figure 8, the storage structure (A) comprises a monorail of the storage structure (A.1), which, in an embodiment, has a substantially cylindrical shape, in which the movement mechanisms (S.2) fit and where the supports for suspended loads (S) move.

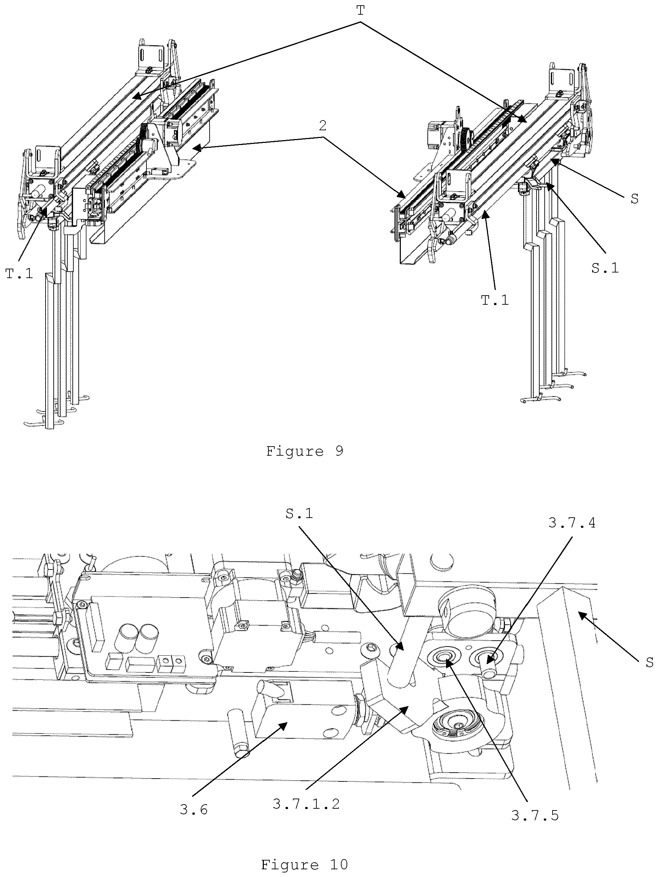

As shown in figure 9, the transport structure (T) comprises a monorail of the transport structure (T.1), which, in an embodiment, has a substantially cylindrical shape, in which the movement mechanisms (S.2) fit and where the supports for suspended loads (S) move.

As can be seen in figures 8 and 9, the storage structure (A) has a storage structure monorail (A.1), which has a format substantially equal to or complementary to the transport structure monorail (T.1) of the transport structure (T), so that the movement mechanisms (S.2) can move between the transport structure monorail (T.1) and the storage structure monorail (A.1) and vice versa.

The double rail (2) performs a telescopic movement, promoted by the interaction of the elements - double rail motor (1.3), which is fixed to the main support (1), responsible for the movement of rail 2 (2.2) and whose movement is transmitted through an attack pinion of the main support (1.1) existing on its drive axle, to a rack of the double rail (2.3) fixed to rail 2 (2.2), resulting in its extendable movement, i.e., it is a movement carried out by sections that move in relation to each other, which allows the adjustment of its length, so that it can move to and from a position exterior to the transport structure (T).

The drag mechanism (3) comprises:
- a motor of the drag mechanism (3.2) whose motion is transmitted to the attack pinion of the drag mechanism (3.3), existing on its drive axle, to a rack of the drag mechanism (3.4) fixed on rail 2 (2.2),
- one linear actuator (3.5) that is associated with a mechanical element (3.7) comprising:
   - a dragger (3.7.1) that includes:
      - a disc (3.7.1.1) at the top in a substantially horizontal position, which has an opening with a substantially cylindrical shape and substantially centred on the disc (3.7.1.1),
      - a drag lever (3.7.1.2), attached to the disc (3.7.1.1), in a substantially vertical position, with a stair-like shape, which allows the actuator of a detection sensor for supports for suspended loads (3.6) to be fitted at the bottom,
   - a connector (3.7.2), belonging to the support of the drag mechanism (3.1), placed in a substantially horizontal position, which at the bottom has an appendage with a substantially cylindrical shape that fits into the disc (3.7.1.1) and which incorporates a plurality of substantially cylindrical holes,
   - a torsion spring (3.7.6) embedded in the appendage with a substantially cylindrical shape at the base of the connector (3.7.2) and that fits into the disc (3.7.1.1), which has the function of ensuring that the dragger (3.7.1) returns to its initial position after each request,
   - two selection pins, selection pin 1 (3.7.4) and selection pin 2 (3.7.5), in a substantially vertical position, which have a substantially cylindrical shape and that fit into the holes in the connector (3.7.2),
   - a rocker (3.7.3) with an inverted "T" shape fixed to the connector (3.7.2) by means of a fastener that is inserted into a hole at the intersection between the horizontal arm and the vertical arm of the "T", to which the selection pins, selection pin 1 (3.7.4) and selection pin 2 (3.7.5), are attached at the ends of the horizontal arm, and the linear actuator (3.5) is attached to the upper vertical end,
   - one end-of-course control sensor (3.8) and a drag mechanism position control sensor (3.9) placed on the drag mechanism holder (3.1) which has the function of detecting the limit positioning, for each side, of the drag mechanism (3) on rail 2 (2.2).

In a preferred embodiment, the connector (3.7.2) has two substantially cylindrical holes.

Since the rocker (3.7.3) is fixed at a single point, it can rotate freely over this point.

The linear actuator (3.5), when set in motion, transmits movement to the rocker (3.7.3), which in turn causes selection pin 1 (3.7.4) and selection pin 2 (3.7.5) to move vertically, blocking the action of the drag lever (3.7.1.2), and which depends on whether the operation to be carried out is to collect or deliver supports for suspended loads (S).

The free movement of the drag lever (3.7.1.2) depends on the position of the selection pins, selection pin 1 (3.7.4) and selection pin 2 (3.7.5), which lock or unlock the drag lever (3.7.1.2) depending on the type of operation to be carried out: collecting or delivering supports for suspended loads (S). The drag lever (3.7.1.2) returns to its original position after the operation has been carried out, by the action of the torsion spring (3.7.6).

The function of the detection sensor for supports for suspended loads (3.6) is to detect the detection pins (S.1) of the supports for suspended loads (S) being moved by the action of the dragger (3.7.1) in both the collection and delivery operations.

The drag mechanism (3) moves along the rail (2.2) and its function is to use the drag lever (3.7.1.2) to collect and deliver supports for suspended loads between storage structures (A) and transport structures (T) and vice versa.

The transport structure (T) can only start moving when the double rail mechanical assembly (2) is in the central position detected by the positioning sensor (1.4).

All programming instructions, movement, electrical start and stop signals, safety, and power supply are generated and controlled by a Programmable Logic Controller (PLC) external to the equipment.

The equipment of the invention is additionally equipped with safety sensors that, in permanent communication with the Programmable Logic Controller (PLC) external to the equipment, stop any operation when the following conditions are met:
- full occupancy of the monorail capacity of the transport structure (T.1) and PLC instruction for collection of additional supports for suspended loads (S),
- full occupancy of the storage structure (A) and equipment for transferring supports (E) in a delivery operation of supports for suspended loads (S).

### Method of collecting supports for suspended loads (S) from the storage structure (A) for the transport structure (T)

The collection operation starts when the transport structure (T) is coupled to the storage structure (A).

The drag mechanism (3) moves to the end of rail 2 (2.2) . Once the position at the end of rail 2 (2.2) has been reached, which is detected by the position sensor of the drag mechanism (3.8), rail 2 (2.2) begins its telescopic path so that the drag lever (3.7.1.2) of the drag mechanism (3) identifies the support for suspended loads (S) to be collected from the storage structure (A) .

The supports for suspended loads (S) are equipped with movement mechanisms (S.2) comprising means of movement and locking parts that ensure the fitting, movement, and locking of the supports for suspended loads (S) on the monorail of the transport structure (T.1). They are also equipped with detection pins (S.1), used by the drag lever (3.7.1.2).

When moving the drag mechanism (3), when the drag lever (3.7.1.2) detects the detection pin (S.1) of the supports for the suspended loads (S) being collected from the storage structure (A), the detection sensor for supports for suspended loads (3.6) is activated and the movement of the drag lever (3.7.1.2) is blocked by the action of selection pin 1 (3.7.4) to allow the collection of supports for suspended loads (S) for the transport structure (T) .

The equipment for transferring supports (E) repeats the operation as many times as necessary until all the usable space of the transport structure (T) is occupied.

In the absence of supports for suspended loads (S), rail 2 (2.2) and the drag mechanism (3) move along their entire travel until the end-of-course sensor (1.5) is actuated. In this case, if there is no support for suspended loads (S) to be collected, all the components of the equipment return to the initial position, i.e., the double rail (2) and the drag mechanism (3) return to the central position determined by the action of the positioning sensor (1.4).

### Method of delivery of supports for suspended loads (S) from the transport structure (T) to it or across several storage structures (A)

The delivery operation begins when the transport structure (T) is coupled to the storage structure (A).

The drag mechanism (3) moves to the end of rail 2 (2.2). The drag mechanism (3), once positioned at the end of rail 2 (2.2), by the action of the position sensor of the drag mechanism (3.8), starts the movement in the opposite direction until it detects the first support for suspended loads (S) existing in the transport structure (T) to be delivered to the storage structure (A) for which it is intended.

When the drag mechanism (3) is moved, when the drag lever (3.7.1.2) detects the first support for suspended loads (S) via the detection pin (S.1), the detection sensor for supports for suspended loads (3.6) is activated. Once the support for suspended loads (S) to be delivered is detected, it is pushed into the storage structure (A) by the drag lever (3.7.1.2), which is blocked by the action of selection pin 2 (3.7.5).

The set consisting of rail 2 (2.2) and the drag mechanism (3) then carries out the outbound movement into the destination storage structure (A).

The equipment for transferring supports (E) repeats the operation as many times as necessary until all supports for suspended loads (S) on the transport structure (T) are unloaded.

Once the delivery operation of the supports for suspended loads (S) has been completed, the double rail (2) and drag mechanism (3) set returns to the central position, which is determined by the action of the positioning sensor (1.4).

## Claims

1. Equipment for transferring supports (E) for suspended loads comprising a main support (1) to which is attached a double rail (2) and a drag mechanism (3), **characterized in that** the double rail (2) consisting of two rails, a rail 1 (2.1) and a rail 2 (2.2) to which a drag mechanism support (3.1) is attached, and by the drag mechanism (3) comprising:
- a drag mechanism motor (3.2) attached to the drag mechanism support (3.1), whose movement is transmitted through an attack pinion of the drag mechanism (3.3) to a rack of the drag mechanism (3.4),
- a linear actuator (3.5) that is associated with a mechanical element (3.7) comprising a dragger (3.7.1) that integrates:
- a disc (3.7.1.1),
- a drag lever (3.7.1.2) attached to the disc (3.7.1.1),
- two selection pins, a selection pin 1 (3.7.4) and a selection pin 2 (3.7.5), for locking the drag lever and that fit into the holes in the connector (3.7.2), and
- a rocker (3.7.3) fixed to the connector (3.7.2).

2. Equipment according to the previous claim **wherein** the mechanical element (3.7) further comprising a torsion spring (3.7.6) that fits the appendage with a substantially cylindrical shape existing at the base of a connector (3.7.2) that engages into the disc (3.7.1.1) and that integrates a plurality of holes, to ensure that the dragger (3.7.1) returns to its initial position after each request.

3. Equipment according to any of the previous claims **wherein** the dragger (3.7.1) further integrating an end-of-course control sensor (3.8) and a drag mechanism position control sensor (3.9) placed on the drag mechanism support (3.1) .

4. Equipment according to any of the previous claims **wherein** the disc (3.7.1.1) having an opening with a substantially cylindrical shape.

5. Equipment according to any of the previous claims **wherein** the connector (3.7.2) being placed in a substantially horizontal position and which at the bottom has an appendage with a substantially cylindrical shape that engages into the disc (3.7.1.1).

6. Equipment according to any of the previous claims **wherein** the connector (3.7.2) integrating two holes, which have a substantially cylindrical shape.

7. Equipment according to any of the previous claims **wherein** selection pin 1 (3.7.4) and selection pin 2 (3.7.5) being placed in a substantially vertical position and having a substantially cylindrical shape and that engage into the holes in the connector (3.7.2).

8. Equipment according to any of the previous claims **wherein** the drag lever (3.7.1.2) being placed in a substantially vertical position and having a stair-like shape.

9. Equipment according to any of the previous claims **wherein** the drag lever (3.7.1.2) having an actuator and a sensor for detecting supports for suspended loads (3.6) attached to the bottom.

10. Equipment according to any of the previous claims **wherein** rail 1 (2.1) and rail 2 (2.2) having a substantially linear shape.

11. Equipment according to the previous claim, **wherein** the fact that next to the electrical cable reel (2.3) there is an end-of-course sensor 1 (2.8) and the end-of-course sensor 2 (2.9), which ensure the effective stopping of the double rail (2) near the lateral ends of the main support (1).

12. Equipment according to the previous claim **wherein** the rocker (3.7.3), which has an inverted "T" shape, being fixed to the connector (3.7.2) through a fastener that is inserted into a hole at the intersection between the horizontal arm and the vertical arm of the "T", to which selection pin 1 (3.7.4) and selection pin 2 (3.7.5) are attached at the ends of the horizontal arm, and the linear actuator (3.5) is attached to the upper vertical end.

13. Equipment according to any of the previous claims **wherein** the drag mechanism (3) further comprising an attack pinion of the drag mechanism (3.3) and a rack of the drag mechanism (3.4) fixed to rail 1 (2.1).

14. Method of using the equipment claimed in any of the previous claims in the transport of supports for suspended loads (S) from/to a storage structure (A) and a transport structure (T) **characterised in that** it comprises the following steps:
- the operation starts when the transport structure (T) and the storage structure (A) are attached to each other;
- the drag mechanism (3) moves to the end of rail 2 (2.2) ;
- the drag mechanism (3), once positioned at the end of rail 2 (2.2), which is detected by the action of the position sensor of the drag mechanism (3.8), starts the movement until the first support for suspended loads (S) to be moved to/from the transport structure (T) and the storage structure (A) is detected;
- when moving the drag mechanism (3), when the drag lever (3.7.1.2) detects the first support for suspended loads (S), through the detection pin (S.1), being moved, the sensor for detecting supports for suspended loads (3.6) is activated;
- once the support for suspended loads (S) is detected in motion, it is pushed by the drag lever (3.7.1.2);
- the equipment for transferring supports (E) repeats the operation as many times as necessary until all the supports for suspended loads (S) have been moved;
- once the operation to deliver the supports for suspended loads (S) is completed, the set consisting of the double rail (2) and the drag mechanism (3) returns to the central position determined by the action of the positioning sensor (1.4).

15. Use of the equipment claimed in any of claims 1 to 13 in the collection and delivery of supports for suspended loads.
